# EUROPEAN PATENT SPECIFICATION

(11) **EP 3 318 326 B1**
(45) Date of publication and mention of the grant of the patent: **31.10.2018**
(21) Application number: 17000829.6
(22) Date of filing: 15.05.2017
(51) Int. Cl.: B01J 23/75, B01J 35/02, B01J 37/00, B01J 37/02, B01J 37/03, B01J 37/06, B01J 37/08, B01J 23/83, B01J 23/02, B01J 37/04, C01C 1/04

(54) **A METHOD FOR OBTAINING PROMOTED COBALT CATALYSTS FOR AMMONIA SYNTHESIS**
VERFAHREN ZUR GEWINNUNG AKTIVIERTER KOBALTKATALYSATOREN ZUR AMMONNIAKSYNTHESE
PROCÉDÉ D'OBTENTION DE CATALYSEURS SUPPORTÉS AU COBALT POUR LA SYNTHÈSE DE L'AMMONIAC

(30) Priority: 04.11.2016 PL 41936116
(43) Date of publication of application: 09.05.2018
(73) Proprietor: Instytut Nowych Syntez Chemicznych, 24-110 Pulawy (PL); POLITECHNIKA WARSZAWSKA, 00-661 Warszawa (PL)
(72) Inventor: Kowalik, Pawel, 24-100 Pulawy (PL); Antoniak-Jurak, Katarzyna, 24-100 Pulawy (PL); Wiercioch, Pawel, 24-100 Pulawy (PL); Raróg-Pilecka, Wioletta, 03-185 Warszawa (PL); Zybert, Magdalena, 03-138 Warzawa (PL); Tarka, Aleksandra, 08-500 Ryki (PL)

(56) References cited:
- US-A- 6 130 184
- WIOLETTA RARÓG-PILECKA ET AL: "Cobalt Catalyst Doped with Cerium and Barium Obtained by Co-Precipitation Method for Ammonia Synthesis Process", CATALYSIS LETTERS, KLUWER ACADEMIC PUBLISHERS-PLENUM PUBLISHERS, NE, vol. 141, no. 5, 26 February 2011 (2011-02-26), pages 678-684, XP019898098, ISSN: 1572-879X, DOI: 10.1007/S10562-011-0564-8
- RAROG-PILECKA ET AL: "Activated carbon as a template for creating catalyst precursors. Unsupported cobalt catalyst for ammonia synthesis", CATALYSIS COMMUNICATIONS, ELSEVIER, AMSTERDAM, NL, vol. 9, no. 5, 4 February 2008 (2008-02-04), pages 870-873, XP022453456, ISSN: 1566-7367, DOI: 10.1016/J.CATCOM.2007.09.014

## Description

The subject matter of the present invention is a method for obtaining cobalt catalysts highly active in ammonia synthesis especially in the low-temperature range (360-450 °C).

Ammonia synthesis is an exothermic reaction that proceeds according to the following formula:

0.5N₂ + 1.5H₂ ↔ NH₃ ΔH = -52.5 kJ/mol

In the conventional plants, ammonia synthesis is carried out under the pressure up to 30 MPa and at temperature of 360-550 °C, in the presence of iron alloy catalyst obtained from magnetite ore using the metallurgical methods. There are two types of iron catalyst applied which differ in stoichiometry of iron oxides: magnetite and wustite ones with the (Fe/O)ₐₜ ratio of 1.3 and 1 respectively. The active component of the catalyst is complex: it is iron with proper structural and electron promoters (K₂O, CaO, Al₂O₃). Therefore, the catalyst needs activating via reduction of iron oxides to metallic iron in the initial period of exploitation.

A very high demand for energy and large scale of ammonia productions require conducting the process at possibly low temperature and pressure and at varied concentrations of ammonia in the process gas. In order to achieve these goals, it is necessary to develop new catalyst types which will catalyze synthesis at significantly lower temperature and high ammonia concentrations. Calculated estimates show that potential advantages arising from the reduction of the process pressure to less than 100 bar depend on the application of a more active ammonia synthesis catalyst (than a conventional one). There are alternative catalytic systems known, which can fulfil the above mentioned criteria e.g. based on alloy supported Fe-Co catalyst [Liu H., Ammonia synthesis catalysts, World Scientific Publishing Co., 2013] in which Ru [US 4136775] is supported on a specially prepared carbon material so-called HSAG (*High Surface Area Graphite*) or Co-Ce-Ba catalyst [Catal. Lett. 141 (2011) 678].

The literature references present different techniques of obtaining the catalytic materials for ammonia synthesis based on Co-Ce-Ba. For instance, according to [Catal. Commun. 9 (2008) 870], such catalyst can be obtained using a multiple impregnation of activated carbon and its thermal processing as well as burning off the carbon support in the final stage. Another method of preparing the catalytic material is described in Patent No. [PL 216899]. In accordance with this solution, the first stage of preparation is obtaining the cobalt-cerium precursor, followed by its calcination to the oxide form. Afterwards, this material is subjected to impregnation with barium salt and then it is subjected to thermal processing with activation via reduction. A similar method of preparation, consisting in obtaining and processing of hydroxide cobalt-cerium precursor, was presented in the paper [RSC Adv., 4 (2014) 38093]. Another method for obtaining a promoted cobalt catalyst suitable for ammonia synthesis is disclosed in an article published in [Catal. Lett. 141 (2011) 678]. The precipitation of the catalyst precursor is carried out in one pot not including circulation system, at a constant temperature in the range from 80 to 90 °C. pH is not constant and increases during the process due to K₂CO₃ solution dosing to cobalt nitrate and cerium nitrate solution. The precursor is filtered out and washed with water, then dried at 120 °C, and afterwards calcined at 500 °C. The Co-Ce oxide powder is impregnated using an aqueous solution of barium nitrite and it is thermally treated into final form of Co-Ce-Ba oxides. Catalyst is obtained in the form of fine-grained powder.

Scientific publications and literature references known so far, related to catalytic materials for ammonia synthesis are merely limited to the preparation process, and they completely omit the issue connected with formation into shapes of the required geometry and size. This issue is highly important with regard to all the industrial catalysts and it determines their practical application. The catalysts applied in ammonia synthesis usually have the shape of irregular granules with a diameter from 1.5 to 3.0 mm. Only in special applications are catalysts with larger grains used. Forming the catalytic material with the use of tableting into so small shapes is problematic and inefficient and it limits the potential industrial application of catalysts.

The development of a fine-grained catalyst based on co-precipitated precursor is the possible method of eliminating the above mentioned limitations. Studies on this issue resulted in the determination of:
1. the method of dosing the reagents and synthesis parameters of Co-Ce precursor i.e. temperature, pH, the type of solvent, aging time of precipitate ensuring the development of high level of specific surface area and pore volume.
2. the required level of washing the catalyst precursor to remove undesireable ions,
3. the method of forming the catalytic material and the type of binding component to ensure the proper textural properties and durability of the final catalyst;
4. the optimal parametres of thermal processing of Co-Ce precursor and Co-Ce-Ba catalyst.

Based on the above, the original method of obtaining a fine-grained catalyst for ammonia synthesis was developed.

The method for obtaining promoted cobalt catalysts for ammonia synthesis via precipitation and thermal processing of catalyst precursor, according to the present invention, consists in carrying out precipitation of the catalyst precursor in a circulation system, at a constant temperature in the range from 60 to 95 °C, by simultaneously dosing to demineralized water cobalt(II) salts with the concentration of 50-250 g Co/dm³ and cerium(III) salts with the concentration not exceeding 200 g Ce/dm³ and potassium carbonate solution and/or sodium carbonate solution and/or potassium hydroxide and/or sodium hydroxide with the weight ratio of sodium/potassium carbonate to sodium hydroxide or potassium hydroxide not exceeding 20.

The precipitation of the precursor is carried out at a constant pH in the range from 8 to 10, preferably from 8.5 to 9.5, and when it is finished, it is subjected to aging for not more than 4 hours at a temperature of 60-95 °C. Afterwards, the precipitate is filtered out and washed with water in order to obtain the filtrate conductivity lower than 200 µS, and next, it is dried at a temperature of 80-120 °C, and then it is calcined.

Next, the oxide form of the catalyst is ground, preferably to obtain the fraction below 50 µm and even more preferably below 30 µm and then it is kneaded with barium nitrate for at least 1 hour to obtain a paste with wetness not exceeding 40% wt. Afterwards, high-alumina cement is added and then the mixture is mixed for no longer than 40 minutes to obtain a paste which is formed using an extruder to shapes with a diameter preferably of 0.8-6 mm which are dried at a temperature of 110-150 °C to obtain the final product.

Preferably, metal nitrates are applied as salts in the precipitation of Co-Ce precursor.

Preferably, an aqueous solution of ethyl alcohol and/or glycerin and/or ethyl glycol with volume percentage in the range from 0 to 30 is applied as the solvent for the preparation of cobalt (II) nitrate (V) and cerium (III) nitrate (V) solution.

Preferably, the calcination of the Co-Ce precursor is carried out at the temperature from 300 °C to 500 °C.

Preferably, the oxide form of the Co-Ce catalyst is kneaded with barium nitrate and aluminous cement using such quantities of components so that the weight ratio of oxide form/aluminous cement would fall within a range of 0-0.25, even more preferably within a range of 0.05-0.1, whereas weight ratio of Ba/Co would fall within a range of 0.15-0.20.

Preferably, the drying temperature of the Co-Ce-Ba catalyst formed into shapes is in the range from 100 °C to 150 °C.

The prime advantage of catalysts obtained according to this method is a high activity per bed volume, especially within the low temperature range. Therefore, its application may allow for achievement of energy savings in ammonia synthesis loop.

The subject matter of the invention is explained in more detail in the examples below.

### EXAMPLE 1

The promoted cobalt catalyst for ammonia synthesis was obtained via carrying out the simultaneous dosing of an aqueous solutions of cobalt nitrate (II) and cerium nitrate (III) with the concentration of 250 g Co/dm³ and 50 g Ce/dm³ respectively, and an alkali solution containing 320 g K₂CO₃/dm³, to the demineralized water with the temperature of 85 °C and circulating in the closed system and maintaining the pH of the formed suspension within the range of 8.8-9.3. Having finished dosing the solutions, the suspension was subjected to aging for 2 hours while maintaining the temperature at 85 °C. Next, the obtained suspension was filtered and nitrate and potassium ions were washed off to obtain the conductivity of filtrate lower than 200 µS, and then the filter cake was dried at the temperature of 110 °C and calcinated at the temperature of 450 °C for 4 hours.

Afterwards, 50 kg of the Co-Ce oxide precursor ground to the fraction with the grain size smaller than 30 µm was kneaded for an hour with barium nitrate solution containing 10.5 kg of this salt to obtain 33% of wetness. After this, 4 kg of aluminous cement was added and kneading was continued for the next 40 minutes. The obtained paste was subsequently formed into shapes with diameter of 1.5 mm using a screw extruder. The obtained shapes were dried at the temperature of 140 °C for 10 hours to achieve the final product.

### EXAMPLE 2

The cerium and barium promoted cobalt catalyst was obtained via carrying out the simultaneous dosing of an aqueous solution of cobalt nitrate (II) and cerium nitrate (III) with the concentration of 190 g Co/dm³ and 38 g Ce/dm³ respectively, and alkali solution containing 260 g K₂CO₃/dm³ and 70 g KOH to the demineralized water with the temperature of 90 °C and circulating in the closed system and maintaining pH of the formed suspension within the range of 8.5-9.0. Having finished dosing the solutions, the suspension was subjected to aging for 1 hour with maintaining the temperature of 85 °C. Next, the obtained suspension was filtered and washed to remove nitrate and potassium ions to obtain the conductivity of filtrate lower than 100 µS, and then the filter cake was dried at the temperature of and 110 °C and calcinated at the temperature of 400 °C for 4 hours.

Afterwards, 30 kg of the Co-Ce oxide precursor ground to the fraction with the grain size smaller than 30 µm was kneaded for 2 hours with barium nitrate solution containing 6.3 kg of this salt to obtain 30% of wetness. After this, 6 kg of cement was added and then, kneading was continued for the next 30 minutes. The obtained paste was subsequently formed into shapes with diameter of 2.0 mm using a screw extruder. The obtained shapes were dried at the temperature of 150 °C for 5 hours to achieve the final product.

### EXAMPLE 3

The cerium and barium promoted cobalt catalyst was obtained via carrying out the simultaneous dosing of an aqueous solution of cobalt nitrate (II) and cerium nitrate (III) with the concentration of 250 gCo/dm³ and 50 gCe/dm³ respectively, and an alkali solution containing 300 gK₂CO₃/dm³ and 80 gKOH to the demineralized water with the temperature of 90 °C and circulating in the closed system and maintaining pH of the formed suspension within the range of 8.5-9.0. Having finished dosing the solutions, the suspension was subjected to aging for 1 hour with maintaining the temperature of 85 °C. Next, the obtained suspension was filtered and nitrate and potassium were washed to obtain the conductivity of filtrate to be lower than 100 µS and then the filter cake was dried at the temperature of 110 °C and calcinated at the temperature of 400 °C for 4 hours.

Afterwards, 30 kg of the Co-Ce oxide precursor ground to the fraction with the grain size smaller than 30 µm was kneaded for 2 hours with barium nitrate solution containing 6.3 kg of this salt to obtain 30% of wetness. After this, 6 kg of cement was added and then, kneading was continued for the next 30 minutes. The obtained paste was subsequently formed into shapes with diameter of 2.0 mm using a screw extruder. The obtained shapes were dried at the temperature of 150 °C for 5 hours to achieve the final product.

### EXAMPLE 4

The cobalt catalyst was obtained via carrying out the simultaneous dosing of an aqueous solution of cobalt nitrate (II) and cerium nitrate (III) with the concentration of 250 gCo/dm³ and 50 gCe/dm³ respectively, and alkali solution containing 320 gK₂CO₃/dm³ to the demineralized water with the temperature of 90 °C and circulating in the closed system and maintaining pH of the formed suspension within the range of 9.0-9.3. An aqueous solution of ethyl alcohol with vol. concentration of 30% was used as the solvent for the preparation of cobalt (II)nitrate (V) and cerium (III) nitrate (v).

Having finished dosing the solutions, the whole mass was subjected to aging for 1 hour while mixing it intensively and maintaining the temperature of 90 °C. Next, the precipitate was filtered and washed to obtain the conductivity of filtrate to be lower than 200 µS after which it was dried at the temperature of 105 °C and calcinated at the temperature of 500 °C for 5 hours.

50 kg of the obtained mass, ground to the fraction with the grain size smaller than 30 µm, was kneaded for 1 hour with barium nitrate containing 10.3 kg of this salt to obtain 35% of wetness. After that, 6 kg of cement was added and then, kneading was continued for the next 25 minutes. The obtained paste was subsequently formed into shapes with diameter of 3.0 mm using a screw extruder. The obtained shapes were dried at the temperature of 150 °C for 10 hours to achieve the final product.

In the examples 1-4, a catalyst was obtained whose activity in the low temperature range of 430-450 °C is approx. 20% higher compared to the conventional magnetite catalysts.

## Claims

1. A method for obtaining a promoted cobalt catalyst for ammonia synthesis via precipitation and thermal processing of a catalyst precursor, **characterized in that** the precipitation of the catalyst precursor is carried out in a circulation system, at a constant temperature in the range from 60 to 95 °C, by simultaneously dosing to demineralized water cobalt(II) salts with the concentration of 50-250 g Co/dm³ and cerium(III) salts with the concentration not exceeding 200 g Ce/dm³ and an alkali solution, at stable pH within the range from 8 to 10, and, after the precipitation is finished, the precipitated precursor is subjected to aging for 4 hours at the temperature of 60-95 °C and afterwards is filtered out and washed with water in order to obtain filtrate conductivity lower than 200 µS, and next, the precursor is dried at the temperature of 80-120 °C and afterwards it is calcined, ground, kneaded with barium nitrate for at least 1 hour to obtain a paste with wetness not exceeding 40% wt., after which aluminous cement is added and then the mixture is mixed for no longer than 40 minutes to obtain a paste which is formed using an extruder into shapes having a diameter of 0.8-6 mm, and the shapes are subsequently dried at the temperature of 110-150 °C to obtain the final product.

2. The method according to claim 1, **characterized in that** the calcined precursor is ground to particle size below 50 µm.

3. The method according to claim 2, **characterized in that** the calcined precursor is ground to particle size below 30 µm.

4. The method according to claim 1, **characterized in that** the pH is within the range from 8.5 to 9.5.

5. The method according to claim 1, **characterized in that** the alkali solution comprises one or more compounds selected from the group consisting of potassium carbonate, sodium carbonate, potassium hydroxide and sodium hydroxide.

6. The method according to claim 5, **characterized in that** in the alkali solution the weight ratio of sodium carbonate or potassium carbonate to sodium hydroxide or potassium hydroxide does not exceed 20.

7. The method according to claim 1, **characterized in that** nitrates are applied as the salts in the precipitation of the Co-Ce catalyst precursor.

8. The method according to claim 7, **characterized in that** an aqueous solution of ethyl alcohol and/or glycerin and/or ethyl glycol with volume percentage ranging from 0 to 30 is applied as the solvent for the preparation of cobalt (II) nitrate (V) and cerium (III) nitrate (V).

9. The method according to claim 1, **characterized in that** the calcination of the Co-Ce catalyst precursor is carried out at a temperature from 300 °C to 500 °C.

10. The method according to any of the preceding claims 1-9, **characterized in that** the oxide form of the Co-Ce catalyst is kneaded with barium nitrate and aluminous cement using such quantities of components that the weight ratio of the oxide form to the aluminous cement falls within the range of 0-0.25, whereas weight ratio of Ba/Co falls within the range of 0.15-0.20.

11. The method according to claim 10, **characterized in that** the weight ratio of the oxide form to the aluminous cement falls within the range of 0.05-0.1.

## Patentansprüche

1. Eine Methode zum Erhalten eines geförderten Kobaltkatalysators zur Ammoniaksynthese über Fällung und thermische Verarbeitung eines Katalysatorvorläufers, **dadurch gekennzeichnet, dass** die Fällung des Katalysatorvorläufers in einem Kreislaufsystem bei einer konstanten Temperatur im Bereich von 60 bis 95 ° C durchgeführt wird, durch gleichzeitiges Dosieren zum demineralisierten Wasser der Kobalt (II) - Salze mit einer Konzentration von 50-250 g Co/dm³ und der Cer (III) - Salze mit einer Konzentration von nicht mehr als 200 g Ce / dm³ und eine Alkalilösung, bei stabilem pH im Bereich von 8 bis 10, und nachdem die Fällung beendet ist, wird der gefällte Vorläufer 4 Stunden lang bei einer Temperatur von 60 bis 95°C einer Alterung unterzogen und danach er wird herausgefiltert und mit Wasser gewaschen um eine Filtratleitfähigkeit von weniger als 200 µS zu erhalten, und als nächstes wird der Vorläufer bei einer Temperatur von 80-120 °C getrocknet und danach wird er kalziniert, gemahlen, mit Bariumnitrat für mindestens 1 Stunde geknetet, um eine Paste derer Feuchtigkeit 40% Gewicht nicht übersteigt, zu erhalten, danach wird Tonerdezement zugegeben und dann wird die Mischung nicht länger als 40 Minuten gemischt um eine Paste zu erhalten, die unter Verwendung eines Extruders zu Formen mit einem Durchmesser von 0,8 bis 6 mm geformt wird, und die Formen werden anschließend bei einer Temperatur von 110-150 ° C getrocknet, um das Endprodukt zu erhalten.

2. Das Verfahren nach Anspruch 1, **dadurch gekennzeichnet, dass** der kalzinierte Vorläufer auf eine Partikelgröße unter 50 µm gemahlen wird.

3. Das Verfahren nach Anspruch 2, **dadurch gekennzeichnet, dass** der kalzinierte Vorläufer auf eine Partikelgröße unter 30 µm gemahlen wird.

4. Das Verfahren nach Anspruch 1, **dadurch gekennzeichnet, dass** pH im Bereich von 8,5 bis 9,5 liegt.

5. Das Verfahren nach Anspruch 1, **dadurch gekennzeichnet, dass** die Alkalilösung eine oder mehrere Verbindungen die, aus der aus Kaliumcarbonat, Natriumcarbonat, Kaliumhydroxid und Natriumhydroxid bestehenden Gruppe ausgewählt sind, umfasst..

6. Das Verfahren nach Anspruch 5, **dadurch gekennzeichnet, dass** in der Alkalilösung das Gewichtsverhältnis von Natriumcarbonat oder Kaliumcarbonat zu Natriumhydroxid oder Kaliumhydroxid 20 nicht übersteigt.

7. Das Verfahren nach Anspruch 1, **dadurch gekennzeichnet, dass** Nitrate als Salze bei der Fällung des Co-Ce-Katalysatorvorläufers angewendet werden.

8. Das Verfahren nach Anspruch 7, **dadurch gekennzeichnet, dass** eine wässrige Lösung von Ethylalkohol und / oder Glycerin und / oder Ethylglycol mit Volumenprozentsatz im Bereich von 0 bis 30 als Lösungsmittel für die Herstellung von Kobalt (II) -nitrat (V) und Cer (III) -nitrat (V) verwendet wird.

9. Das Verfahren nach Anspruch 1, **dadurch gekennzeichnet, dass** das Kalzinieren des Co-Ce Katalysatorvorläufers bei einer Temperatur von 300 ° C bis 500 ° C durchgeführt wird.

10. Das Verfahren nach einem der vorhergehenden Ansprüche 1-9, **dadurch gekennzeichnet, dass** die Oxidform des Co-Ce-Katalysators mit Bariumnitrat und Tonerdezement geknetet wird, unter Verwenden solcher Mengen von Komponenten, dass das Gewichtsverhältnis der Oxidform zum Tonerdezement in den Bereich von 0-0,25 fällt während das Gewichtsverhältnis von Ba / Co in den Bereich von 0,15-0,20 fällt.

11. Das Verfahren nach Anspruch 1, **dadurch gekennzeichnet, dass** das Gewichtsverhältnis der Oxidform zu dem Tonerdezement in den Bereich von 0,05-0,1 fällt.

## Revendications

1. Procédé d'obtention d'un catalyseur au cobalt activé pour la synthèse d'ammoniac par précipitation et traitement thermique d'un précurseur de catalyseur, **caractérisé en ce que** la précipitation du précurseur de catalyseur est réalisée dans un système de circulation, à une température constante dans une plage de 60 à 95 ° C, en dosant simulairement à de l'eau déminéralisée des sels de cobalt (II) avec une concentration de 50-250 g de Co/dm3 et de sels de cérium (III) à une concentration n'excédant pas 200 g de Ce/dm3 et une solution alcaline, à pH stable compris entre 8 et 10 et, une fois la précipitation terminée, le précurseur précipité est soumis au vieillissement pendant 4 heures à une température de 60-95 ° C et après est filtré et lavé avec de l'eau afin d'obtenir une conductivité du filtrat inférieure à 200 µS, et ensuite, le précurseur est séché à une température de 80-120 ° C puis est calciné, broyé, pétri avec du nitrate de baryum pendant au moins 1 heure pour obtenir une pâte dont l'humidité n'excède pas 40% en poids, après quoi le ciment alumineux est ajouté, puis le mélange est mélangé pendant pas plus de 40 minutes pour obtenir une pâte qui est formée en utilisant une extrudeuse dans des formes ayant un diamètre de 0,8 à 6 mm, et les formes sont ensuite séchées à une température de 110 à 150 ° C pour obtenir le produit final.

2. Procédé selon la revendication 1, **caractérisé en ce que** le précurseur calciné est broyé à une granulométrie inférieure à 50 µm.

3. Procédé selon la revendication 2, **caractérisé en ce que** le précurseur calciné est broyé à une granulométrie inférieure à 30 µm.

4. Procédé selon la revendication 1, **caractérisé en ce que** le pH est compris entre 8,5 et 9,5.

5. Procédé selon la revendication 1, **caractérisé en ce que** la solution alcaline comprend un ou plusieurs composés choisis dans le groupe constitué par le carbonate de potassium, le carbonate de sodium, l'hydroxyde de potassium et l'hydroxyde de sodium.

6. Procédé selon la revendication 5, **caractérisé en ce que**, dans la solution alcaline, le rapport en poids du carbonate de sodium ou du carbonate de potassium à l'hydroxyde de sodium ou à l'hydroxyde de potassium n'excède pas 20.

7. Procédé selon la revendication 1, **caractérisé en ce que** des nitrates sont appliqués en tant que sels dans la précipitation du précurseur de catalyseur Co-Ce.

8. Procédé selon la revendication 7, **caractérisé en ce que** l'on applique une solution aqueuse d'alcool éthylique et/ou de glycérine et/ou d'éthylglycol avec un pourcentage volumique allant de 0 à 30 comme solvant pour la préparation du nitrate de cobalt (II) (V) et le nitrate de cérium (III) (V).

9. Procédé selon la revendication 1, **caractérisé en ce que** la calcination du précurseur de catalyseur Co-Ce est réalisée à une température de 300 ° C à 500 ° C.

10. Procédé selon l'une des quelconques revendications précédentes 1 à 9, **caractérisé en ce que** la forme oxyde du catalyseur Co-Ce est malaxée avec du nitrate de baryum et du ciment alumineux en utilisant des quantités de composants telles que le rapport pondéral de la forme oxyde au ciment alumineux se situe dans une plage de 0 à 0,25, alors que le rapport pondéral Ba / Co se situe dans une plage de 0,15 à 0,20.

11. Procédé selon la revendication 10, **caractérisé en ce que** le rapport pondéral de la forme oxyde au ciment alumineux est compris dans une plage de 0,05 à 0,1.
